# EUROPÄISCHE PATENTSCHRIFT

(11) **EP 0 773 972 B1**
(45) Veröffentlichungstag und Bekanntmachung des Hinweises auf die Patenterteilung: **10.01.2001**
(21) Anmeldenummer: 96914210.8
(22) Anmeldetag: 14.05.1996
(51) Int. Cl.: C08L 1/12, C08L 97/02, C08L 1/02

(54) **FORMKÖRPER AUS VERBUNDMATERIAL AUF DER BASIS VON CELLULOSEACETAT UND VERSTÄRKENDEN NATÜRLICHEN CELLULOSEFASERN, EIN VERFAHREN ZU DESSEN HERSTELLUNG UND DESSEN VERWENDUNG**
SHAPED BODY MADE OF COMPOSITE MATERIAL BASED ON CELLULOSE ACETATE AND REINFORCING NATURAL CELLULOSE FIBRES, A PROCESS FOR ITS PRODUCTION, AND ITS USE
CORPS MOULE CONSTITUE D'UN MATERIAU COMPOSITE A BASE D'ACETATE DE CELLULOSE ET DE FIBRES CELLULOSIQUES NATURELLES D'ARMATURE, SON PROCEDE DE FABRICATION ET SON UTILISATION

(30) Priorität: 15.05.1995 DE 19517763
(43) Veröffentlichungstag der Anmeldung: 21.05.1997
(73) Patentinhaber: Rhodia Acetow Aktiengesellschaft, 79108 Freiburg (DE)
(72) Erfinder: KARSTENS, Ties, D-79268 Bötzingen (DE); SCHÄTZLE, Joachim, D-79341 Kenzingen (DE); KOHLER, Robert, D-72116 Mössingen (DE); WEDLER, Michael, D-72760 Reutlingen (DE); TUBACH, Martin, D-72770 Reutlingen (DE)
(74) Vertreter: Hagemann, Heinrich, Dr.rer.nat., Dipl.-Chem.
(86) Internationale Anmeldenummer: EP9602074
(87) Internationale Veröffentlichungsnummer: WO9636666

(56) Entgegenhaltungen:
- EP-A- 0 687 711
- FR-A- 519 822
- CHEMISCHE RUNDSCHAU, Nr. 39, 30.September 1984, DE, Seite 3 XP002009881 ASCHE W.: "AVK-Tagung "Faserverstärkte Kunststoffe"- Weg zurück zur Natur" in der Anmeldung erwähnt

## Beschreibung

Die Erfindung betrifft einen Formkörper aus Verbundmaterial auf der Basis von Celluloseacetat als Bindemittel und verstärkenden natürlichen Cellulosefasern bzw. natürlichen cellulosehaltigen Fasern, ein Verfahren zur Herstellung eines solchen Formkörpers sowie dessen Verwendung in besonderen technischen Bereichen.

In vielen Bereichen, beispielsweise in der Automobil-, Verpackungs-, Möbel-, Elektro- und Elektronikindustrie sowie im Baugewerbe, werden neben Kunststoffen aus thermoplastischen oder duroplastischen Polymeren gelegentlich Materialien aus polymerhaltigen Faserstrukturen oder faserhaltigen bzw. faserverstärkten Polymeren eingesetzt. Derartige Materialien werden vielfach als Halbzeug hergestellt, beispielsweise in Form von Vliesstoffen, Matten und Platten. Diese werden unmittelbar oder erst nach weitergehender Verarbeitung oder Veredelung, z.B. durch Formgebung oder Beschichtung, eingesetzt. Die erwähnten Polymerwerkstoffe können außer Fasermaterialien oder anstelle von Fasermaterialien zur Erzielung bestimmter Eigenschaften geeignete Füllstoffe enthalten. Die Vielfalt und die Zahl der Anwendungsmöglichkeiten solcher Verbundmaterialien aus den unterschiedlichsten Polymeren, Fasern und Füllstoffen ist fast unübersehbar.

Im Zuge des gestiegenen Umweltbewußtseins und verschärfter Gesetze spielt die Recyclingfähigkeit von Werkstoffen bzw. deren umweltfreundliche Beseitigung eine immer wichtigere Rolle. Dabei kommt insbesondere der umweltschonenden Entsorgung Bedeutung zu, da die Recyclingfähigkeit wegen zunehmender Verunreinigungen und Materialschäden begrenzt ist und dann eine Beseitigung unvermeidlich wird. Diese kann nur durch Verbrennen oder Deponieren erfolgen. Ein zeitlich unbegrenztes Deponieren scheidet aus Platzgründen aus. Eine besonders einfache und günstige Form der Beseitigung ist der biologische Abbau, der beispielsweise durch eine Kompostierung erfolgen kann. Wenn nachfolgend von "biologisch abbaubar" gesprochen wird, dann bedeutet das, daß die entsprechende Substanz einem Abbau durch lebende Organismen (Organismen / Mikroorganismen) und/oder durch natürliche umweltbedingte Faktoren zugänglich ist, z.B. den chemischen Abbau durch Bakterien, Pilze, insbesondere Schimmelpilze und Hefen. Kunststoffmaterialien, die gewöhnlich in Verpackungsmaterialien herangezogen werden, insbesondere Polystyrol, sind biologisch nicht abbaubar. Bei Kohlenhydraten führt der biologische Abbau, beispielsweise vornehmlich in Form einer anaeroben, bakteriell bedingten Zersetzung, zu unbedenklichen niederen Fettsäuren, Alkohol und Kohlendioxid. Dies ist dem Begriff "Fäulnis" unterzuordnen. Zwischenprodukte der Fäulnisprozesse können zu unbedenklichen neuen polymeren Produkten zusammentreten; diese vorteilhafte Humifizierung macht man sich bei der Kompostierung zu nutze. Hierunter versteht man insbesondere den biologischen Abbau bzw. die Umwandlung von organischen Substanzen, insbesondere organischen Abfällen, Holz, Blättern, u.a. Pflanzenmaterial, Papier und Klärschlamm, der unter Wärmeentwicklung ("Selbsterhitzung") verläuft und zur Bildung von Kompost, einer dunklen, krümligen Masse, mit vorteilhaftem Anteil an Nährsalzen (Phosphate, Stickstoff- und Caliumverbindung) führt (vgl. Römpp Chemie-Lexikon, 9. Aufl., Bd. 3, 1990, S. 2312 / 2313).

Im Hinblick auf die angesprochenen Möglichkeiten, bestimmte Abfallmaterialien einem biologischen Abbau zu unterziehen, werden deswegen bei der Materialentwicklung zunehmend Naturprodukte interessant. Sie bieten viele Vorteile. Als nachwachsende Rohstoffe tragen sie zur Resourcenschonung bei. Ferner sind sie überwiegend nicht toxisch und rückstandsfrei verbrennbar. Ihre Abbauprodukte sind umweltverträglich.

Werkstoffe aus Spänen oder natürlichen Fasern, wie Zellstoff, Baumwolle, Bastfasern und Wolle, werden schon lange zu bekannten Produkten, wie Papier, Pappen, Filzen, Faserplatten und Spanplatten verarbeitet. Auch können aus solchen Spänen oder natürlichen Fasern nach unterschiedlichen Verfahren Formteile (Formkörper) hergestellt werden. Daneben gibt es viele neue Entwicklungen, bei denen hochfeste Naturfasern, wie Flachs, Hanf und Ramie, deren mechanische Eigenschaften teilweise mit denen synthetischer Hochleistungsfasern vergleichbar sind, als Verstärkungsfasern in Verbundmaterialien bzw. -werkstoffen eingesetzt werden. Den alten und den neuen Werkstoffen ist gemeinsam, daß sie zur Erzielung von Festigkeit, Steifigkeit, Verformbarkeit oder Dauerhaftigkeit ein synthetisches Polymer oder synthetische Polymere als Bindemittel enthalten müssen. Wenn aber die biologische Abbaubarkeit erforderlich ist, kommen zunächst nur natürliche Bindemittel, wie Stärke und Gummen, in Frage. Deren Wasserlöslichkeit ist jedoch nachteilig.

Die Entwicklung, synthetische, biologisch nicht abbaubare Polymere in den Verbundmaterialien durch biologisch abbaubare Polymere zu ersetzen, ist noch nicht abgeschlossen. Natürliche Produkte, wie Cellulose und Stärke, sind als direkt verformbare Massen für die meisten Zwecke nicht geeignet oder den synthetischen Polymeren hinsichtlich Variabilität der Eigenschaften und Verarbeitung unterlegen. Biologisch abbaubare und für Verbundwerkstoffe geeignete neuartige Polymere sind beispielsweise die Polyhydroxybutyrate. Sie sind aber sehr teuer.

Bei den Verbundmaterialien bzw. -werkstoffen kann das Mischungsverhältnis zwischen Bindemittelkomponente und Verstärkungs- oder Füllkomponente in weiten Bereichen schwanken. Der Anteil des polymeren Bindemittels richtet sich lediglich nach den für den jeweiligen Einsatzzweck angestrebten Eigenschaften. Für Dämmstoffe oder bestimmte Verpackungsmaterialien kommen z.B. relativ weiche Vliesstoffe mit nur geringen Anteilen an polymerem Bindemittel in Frage. Aber auch harte und steife Faserplatten können mit sehr niedrigen Bindemittelzusätzen hergestellt werden. Andererseits sind für zähelastische, wasserfeste oder thermoformbare Materialien höhere Polymeranteile notwendig. Wenn die Materialeigenschaften schließlich überwiegend vom Polymer bestimmt werden sollen, sind gegebenenfalls nur geringe Zusätze an Füll- oder Verstärkungsmaterial - lediglich zur Modifizierung - erforderlich.

Verformbare Halbzeuge für z.B. Automobilteile, wie Verkleidungen (beispielsweise Türverkleidungen) und Dachhimmel, werden derzeit in großer Menge aus harzgebundenen Fasermatten aus Glasfasern, Holzfasern, Reißbaumwolle oder Bastfasern hergestellt. Als Polymer werden überwiegend Phenolharze eingesetzt. Dies ist jedoch in toxikologischer und ökologischer Hinsicht umstritten. Daher sind zunehmend auch andere Duromere, wie Epoxide oder ungesättigte Polyester, im Einsatz. Duromere Bindemittel haben den Vorteil, daß sie bei den teilweise extremen Temperaturen im Auto nicht zur Verformung neigen. Nachteilig ist jedoch beim Einsatz von duromeren Bindemitteln der aufwendige Verarbeitungsprozeß und der hohe Preis. So sind insbesondere Epoxide relativ teuer. Weiter ist es nachteilig, daß ausgehärtete Duromere schwierig zu recyclieren sind. Aus diesen Gründen werden derzeit in großem Umfang andere faserverstärkte thermoplastische Polymere, zumeist Polypropylen, eingesetzt. Diese zeigen jedoch eine geringe Wärmeformstabilität. Als Alternative zu Glasfasern kommen Naturfasern, wie Zellstoff oder Jute, aber auch Holzmehl zum Einsatz. Die bisher bekannten Formteil-Werkstoffe enthalten in der Regel mindestens 20 Masse-% an Polymeren. Durch diesen relativ hohen Polymeranteil werden die Fasern so weit umhüllt und eingebunden, daß deren biologische Abbaubarkeit nicht mehr möglich ist.

Als Dämmstoffe zur Wärmeisolation von Gebäuden werden in großen Mengen Glas- oder Mineralfasermatten eingesetzt, die mit geringen Anteilen an Duromeren, wie Phenol- oder Harnstoffharz, gebunden sind. Wegen der toxikologischen Bedenken gegen Mineralfasern und deren ungeklärter Entsorgung werden zunehmend Naturfasermatten entwickelt und angeboten. Je nach Herstellungsprozeß müssen auch diese mit geeigneten polymeren Bindemitteln verfestigt werden. Im Einsatz sind beispielsweise für die thermische Verfestigung leichtschmelzende synthetische Bindefasern. Diese stehen jedoch im Widerspruch zur Forderung nach biologischer Abbaubarkeit.

Aus verschiedenen Veröffentlichungen, z.B. aus "Verpackung aus nachwachsenden Rohstoffen", Vogel Buchverlag, Würzburg, 1. Aufl., 1994, S. 146 - 148 sowie 374 - 380, aus "Nachwachsende und bioabbaubare Materialien im Verpackungsbereich", Roman Kovar Verlag, München, 1. Aufl., 1993, S. 120 - 126 sowie S. 463 und der DE 39 14 022 A1, ist ein biologisch durch Kompostieren leicht abbaubares Rohstoffmaterial auf der Basis von Celluloseacetat und Zitronensäureestern und dessen Verwendung zur Herstellung von beispielsweise Hüllen oder Behältern für Öllichte, Ewiglichtölkerzen, Kompositionsöllichte, andere Grablichtausführungen, Opferlichten und Folien bekannt. Dieses Kunststoffmaterial enthält neben den angegebenen Materialien Polyester und gegebenenfalls andere organische Säuren und/oder Säureester. Der Zitronensäureester dient als Weichmacher und führt dazu, daß das Celluloseacetat thermoplastisch verarbeitet werden kann, also zu einem Formkörper ausformbar ist.

Ferner ist aus dem Artikel "AVK-Tagung <<Faserverstärkte Kunststoffe>> - Weg zurück zur Natur" von Wolfgang Asche in der Zeitschrift "Chemische Rundschau", Nr. 39, 30. September 1994, S. 3, die Verwendung des zuvor erwähnten, u.a. in dem genannten Werk "Verpackung aus nachwachsenden Rohstoffen" beschriebenen Kunststoffmaterials auf der Basis von Cellulose(di)acetat und Zitronensäureestern zusammen mit Naturfasern, wie Ramie, Flachs, Sisal oder Hanf, zur Herstellung von Verbundwerkstoffen bekannt. Das erwähnte ausformbare Material auf der Basis von Cellulose(di)acetat, Zitronensäureestern und Polyestern und gegebenenfalls anderen organischen Säuren und/oder Säureestern sowie Naturfasern, Ramie, Flachs, Sisal oder Hanf läßt sich zu Formkörpern verarbeiten, die biologisch gut abbaubar sind. Aufgrund des hohen Preises des Kunststoffmaterials sind sie relativ teuer. Nachteilig ist daran insbesondere der Anteil an Zitronensäureester als Weichmacher. Bei der Verarbeitung des Materials kann dieser Weichmacher bei erhöhter Temperatur entweichen, was zu einer unerwünschten Dampf- bzw. Rauchbelastung führen kann. Auch kann der Weichmacher bei Normaltemperatur an die Oberfläche des Materials migrieren und umweltbeeinträchtigend verdampfen. Durch die Einbindung des niedermolekularen Weichmachers zeigt das Fertigerzeugnis auch eine Festigkeitseinbuße. Ferner hat dieses einen ziemlich niedrigen Erweichungspunktes, der auf den Weichmacher zurückgeht.

Die US 3 271 231 betrifft ein trägerloses, flexibles Faservlies aus Celluloseacetatfasern und Cellulosefasern. Bei dessen Herstellung wird zwingend Weichmacher in einer Menge von 2 bis 8 Gew.-% eingesetzt. Aus der US 3 271 231 geht hervor, daß das Celluloseacetat nicht vollständig plastifiziert wird, sondern lediglich erweicht und die Cellulosefasern an deren Berührungspunkten verbindet. Auf diese Weise werden flexible Flächengebilde mit offener Struktur erhalten.

Die bekannten Verfahren zur Herstellung von Formkörpern auf der Basis von Celluloseacetat und verstärkenden natürlichen Cellulosefasern sowie die danach hergestellten Formkörper verlangen zwingend die Anwesenheit von Weichmachern. Dies ist jedoch unter verschiedenen Gesichtspunkten nachteilig. So führt der Weichmacher zu einer geringeren Wärmestandfestigkeit, als deren Maß z.B. die Vicat-Temperatur gelten kann. Die Wärmestandfestigkeit der bekannten Materialien ist für Anwendungen z.B. im Automobilsektor unzureichend, wo deutlich höhere Vicat-Temperaturen angestrebt werden. Andererseits wurde die Mitverwendung von Weichmacher bei der thermischen Formgebung von Celluloseacetat bisher in der Fachwelt als unbedingt notwendig erachtet. Reine Celluloseacetate lassen sich kaum unzersetzt schmelzen, da deren Erweichung stets von thermischer Zersetzung begleitet ist. So wird in der Monographie "Cellulose and Cellulose Derivatives", Bd. V, 3. Teil, Verfasser Emil Ott, H. M. Spurlin, auf S. 1364 ausgeführt: "...softening and degradation of 2,5 cellulose acetate is in the range 235°C to 270°C...". Der Fachmann mußte also davon ausgehen, daß bei der thermischen Verformung von Celluloseacetaten stets Weichmacher erforderlich sind.

Der Erfindung liegt die Aufgabe zugrunde, die eingangs bezeichneten Formkörper so weiterzubilden, daß sie die angesprochenen physikalischen Nachteile der bekannten Formkörper nicht aufweisen, problemlos biologisch abbaubar sind und die wünschenswerten mechanischen Eigenschaften, wie insbesondere Festigkeit und Wärmeformbeständigkeit, zeigen und auch die strengen Gebrauchsanforderungen erfüllen. Insbesondere sollen sie bei höherer Temperatur zu keiner Dampf- bzw. Rauchbelastung führen und die Notwendigkeit der Einbeziehung eines Weichmachers ausschließen.

Erfindungsgemäß wird diese Aufgabe dadurch gelöst, daß das Celluloseacetat einen Substitutionsgrad (DS) von 1,2 bis 2,7 und der Formkörper eine Vicat-Temperatur von mindestens 160°C aufweist und das Masseverhältnis von Celluloseacetat zu den natürlichen Cellulosefasern bzw. natürlichen cellulosehaltigen Fasern 10:90 bis 90:10 bertägt, wobei der Formkörper weitgehend oder Vollständig frei an externen Weichmacher ist.

Unter dem Begriff "Formkörper" sollen im Rahmen der Erfindung insbesondere starre Formkörper verstanden werden, vorzugsweise mit glatter Oberfläche. Das als Bindemittel eingesetzte Celluloseacetat bildet vorzugweise eine Matrix, in die die verstärkenden Fasern, abgesehen von den sichtbaren Oberflächen und von Schnittflächen, im wesentlichen vollständig eingebettet sind.

Die Erfindung beruht insbesondere auf der Erkenntnis, daß bei Einhaltung bestimmter Verfahrensbedingungen hinsichtlich des Substitutionsgrades des Celluloseacetats, des Feuchtigkeitsgehalts, der Temperatur und des Drucks eine Mischung von Celluloseacetat mit natürlichen Cellulosefasern bzw. natürlichen cellulosehaltigen Fasern ohne externen Weichmacher zu Formkörpern verarbeitet werden kann. Die Bedingungen werden nachstehend im Zusammenhang mit dem erfindungsgemäßen Verfahren näher erläutert.

Es wird angenommen, daß das aufgrund des Mindestfeuchtigkeitsgehalts im Ausgangsmaterial vorhandene Wasser als "temporärer Weichmacher" wirkt. Während des Herstellungsverfahrens entweicht das Wasser größtenteils, so daß damit die weichmachende Wirkung anschließend wieder aufgehoben ist. Insbesondere durch den weitgehenden bzw. vollständigen Verzicht auf externe Weichmacher werden erfindungsgemäß Formkörper mit bislang nicht erreichter hoher Vicat-Temperatur erhalten. Hierdurch werden auch der Zug-E-Modul, die Biegefestigkeit und der Biege-E-Modul günstig beeinflußt. Die Zugabe geringer Mengen üblicher Weichmacher ist im Rahmen der Erfindung grundsätzlich nicht ausgeschlossen, so lange der erhaltene Formkörper eine Vicat-Temperatur von mindestens 160°C aufweist.

Der erfindungsgemäße Formkörper enthält Celluloseacetat als Bindemittel. Cellulose acetat ist seit langem bekannt und wird großtechnisch überwiegend zur Herstellung faserförmiger Materialien (Filamente und Spinnfasern) sowie zur Herstellung von Folien eingesetzt. In großen Mengen wird faserförmiges Celluloseacetat für die Herstellung von Zigarettenfiltern herangezogen, in kleineren Mengen für Textilien. Auch ist es, wie vorstehend gezeigt, bekannt, daß Celluloseacetat biologisch abbaubar ist und dessen biologischer Abbau beschleunigt werden kann, wenn dessen Acetylzahl verringert wird. Als Werkstoff zur Herstellung von Verbundwerkstoffen wurde reines Celluloseacetat bisher nicht eingesetzt, da man davon ausging, daß dieses den gravierenden Nachteil hat, daß es sich nicht thermoplastisch verarbeiten läßt und bei der Weiterverarbeitung zu Produkten mit wenig attraktiven Eigenschaften führt. Es muß daher als äußerst überraschend angesehen werden, daß sich im Rahmen der Erfindung reines Celluloseacetat, ohne daß zusätzlich ein Weichmacher mit seinen nachteiligen Auswirkungen herangezogen werden muß, thermoplastisch verarbeiten läßt. Dabei sind bezüglich seines Substitutionsgrades (DS) Rahmenbedingungen zu beachten. So hat es sich gezeigt, daß der Substitutionsgrad (DS) unter 3, nämlich in dem Bereich von 1,2 bis 2,7 liegen sollte. Bevorzugt liegt der Substitutionsgrad (DS) zwischen 1,8 bis 2,6 und insbesondere zwischen 2,1 und 2,5.

Wird der Substitutionsgrad (DS) von 2,7 überschritten, dann führt das zu einer massiven Verschlechterung der thermoplastischen Verarbeitbarkeit. Ein Substitutionsgrad (DS) unter 1,2 bedeutet, daß der Formkörper in hohem Maße Feuchtigkeit aufnehmen kann und dann nicht mehr formstabil ist.

Der Polymerisationsgrad (DP) des Celluloseacetats liegt vorzugsweise zwischen 140 bis 270, insbesondere zwischen 170 bis 250. Liegt der Polymerisationsgrad (DP) zwischen 140 und 270, dann stellen sich besonders vorteilhafte Eigenschaften ein, wie insbesondere hohe mechanische Festigkeiten bei gleichzeitig guter Verarbeitbarkeit bei der Formgebung.

Weiterer wichtiger Bestandteil des erfindungsgemäßen Formkörpers sind die verstärkenden natürlichen Cellulosefasern bzw. natürlichen cellulosehaltigen Fasern, die im Sinne der vorstehend dargestellten Definition als "biologisch abbaubar" zu verstehen sind. Dabei kann in Einzelfällen auch von einem weitgehend biologischen Abbau gesprochen werden, der möglichst zu solchen Abbauprodukten führen sollte, die als umweltunbedenklich anzusehen sind. Erfindungsgemäß werden mit besonderem Vorteil eingesetzt natürliche Cellulosefasern bzw. natürliche cellulosehaltige Fasern in Form von Kapok-, Sisal-, Jute-, Flachs-, Kokos-, Kenaf-, Abaka-, Maulbeerbast-, Hanf-, Ramie- und/oder Baumwollfasern. Die Fasern haben vorzugsweise eine mittlere Faserlänge von 0,2 bis 100 mm, insbesondere 3 bis 30 mm, und einen mittleren Querschnittsdurchmesser von 8 bis 100 µm, insbesondere von 10 bis 30 µm.

Das Masseverhältnis von Celluloseacetat zu verstärkenden natürlichen Cellulosefasern bzw. natürlichen cellulosehaltigen Fasern ist nicht kritisch eingeschränkt. Es liegt zwischen 10:90 bis 90:10, insbesondere zwischen 15:85 bis 85:15 und ganz besonders bevorzugt zwischen 25:75 bis 60:40.

Aufgrund des nachfolgend noch näher dargestellten Verfahrens zur Herstellung der erfindungsgemäßen Formkörper erlangen diese die erforderliche Wärmestabilität, wofür die sog. Vicat-Temperatur ein geeignetes Maß ist. Diese wird bestimmt nach der DIN 53 460 (Dezember 1976). Nach dieser Norm wird die Temperatur ermittelt, bei der ein Stahlstift mit einem kreisförmigen Querschnitt von 1 mm² und einer Länge von mindestens 3 mm unter Aufbringen einer Kraft von 50 N 1 mm tief senkrecht in einen Probekörper eindringt. Hierüber erfolgt eine Aufheizung mit der Aufheizrate von 120 K/min. Die Vicat-Temperatur liegt bei den meisten Polymeren deutlich unterhalb der Temperatur, bei der diese vollständig in den flüssigen Zustand übergehen. Im Rahmen der Erfindung beträgt diese mindestens etwa 160°C, vorzugsweise mindestens 170°C und insbesondere 180 bis 200°C.

Es kann vorteilhaft sein, den erfindungsgemäßen Formkörpern zusätzlich mineralische Materialien zur Verbesserung der mechanischen Eigenschaften einzuverleiben. Diese sind zwar nicht biologisch abbaubar, aber zumindest inert und ökologisch unbedenklich. Bevorzugte Beispiele hierfür sind Calciumcarbonat, Calciumsulfat, Siliziumdioxid und Aluminosilikate, wie z.B. Kaolin. Das mineralische Material liegt vorzugsweise in einer Menge von 5 bis 50 Masse-%, insbesondere 10 bis 20 Masse-% in dem erfindungsgemäßen Formkörper vor. Neben diesen mineralischen Materialien kann der erfindungsgemäße Formkörper Farbmittel in Form von Farbstoffen und/oder insbesondere Farbpigmenten enthalten. Soll der erfindungsgemäße Formkörper weiß eingefärbt sein, dann wird ein Weißpigment in Form von Titandioxid bevorzugt. Weitere denkbare Farbpigmente sind beispielsweise Eisenoxide. Um hier die gewünschte Einfärbung zu erzielen, reichen 0,2 bis 1 Masse-% Farbmittel innerhalb des erfindungsgemäßen Formkörpers aus.

Den erfindungsgemäßen Formkörpern werden noch weitere Substanzen zur Modifizierung, zur Verbesserung der Verarbeitbarkeit und zur Erzielung spezifischer Materialeigenschaften einverleibt werden, sofern dadurch die biologische Abbaubarkeit und die ökologische Unbedenklichkeit nicht wesentlich eingeschränkt werden. Als typische weitere Hilfsmittel und Additive kommen in Frage: Stabilisatoren, unbedenkliche Weichmacher, Vernetzer, Gleitmittel, Haftvermittler, Flammschutzmittel, Hydrophobier- oder Hydrophiliermittel, Biozide, Rodentizide und Aromen. Darüber hinaus können natürliche und biologisch abbaubare Füllmittel einbezogen werden, die bei der Verarbeitung oder Wiederaufarbeitung von Textilabfällen aus Naturfasern, von Reißwolle und Reißbaumwolle sowie von Abfällen aus Altpapier anfallen.

Die erfindungsgemäßen Formkörper werden anhand des nachfolgend beschriebenen erfindungsgemäßen Verfahrens hergestellt, wobei die angesprochenen Ausgangsmaterialien zu einem Verbundmaterial verarbeitet werden, bei dem der Celluloseacetat-Anteil die Funktion des Bindemittels erfüllt und dort eine weitgehend verschmolzene Phase bildet.

Bei der Herstellung der erfindungsgemäßen Formkörper wird insbesondere derartig vorgegangen, daß Celluloseacetat mit den natürlichen Cellulosefasern bzw. den natürlichen cellulosehaltigen Fasern in einem Masseverhältnis von 10 : 90 bis etwa 90 : 10 gemischt, der Gesamtfeuchtigkeitsgehalt auf mindestens 3 Masse-%, bezogen auf die Gesamtmenge des Celluloseacetats in diesem Gemisch, eingestellt, und dieses Gemisch bei einer Temperatur von 220 bis 280°C und einem Druck von 30 bis 150 bar verpreßt wird. Vorzugsweise beträgt das oben angesprochene Masseverhältnis von Celluloseacetat zu den natürlichen Cellulosefasern bzw. den natürlichen cellulosehaltigen Fasern 15 : 85 bis 85 : 15 und ganz besonders von 25 : 75 bis 60 : 40. Wird der untere Grenzwert von 10 : 90 unterschritten, dann liegt nicht ausreichend Celluloseacetat vor, um die Cellulosefasern ausreichend fest im Verbund zu halten. Wird der obere Grenzwert von etwa 90 : 10 überschritten, dann geht die angestrebte verstärkende Funktion der Cellulosefasern weitgehend verloren.

Die Ausgangsmaterialien werden vorzugsweise bei Raumtemperatur gemischt und dann den obigen Verfahrensbedingungen unterworfen. Dabei erfolgt das Verpressen vorzugsweise bei einer Temperatur von 240 bis 270°C und einem Druck von 50 bis 130 bar. Die Einhaltung des oben genannten Druckrahmens von 30 bis 150 bar ist erfindungswesentlich und läßt sich wie folgt erklären. Ein Druck unter 30 bar führt dazu, daß Celluloseacetat nicht ausreichend gut fließen kann und infolgedessen nicht homogen im Formkörper vorliegt, während ein Überschreiten des Drucks von 150 bar insofern nachteilig ist, als dieses einen sehr hohen technischen Aufwand erfordern würde. Um das Celluloseacetat ausreichend zu verschmelzen, ist es erforderlich, daß bei der Formgebung unter Druck eine Mindesttemperatur von etwa 220°C herrscht. Wird der obere Grenzwert von 280°C überschritten, dann bedeutet das, daß das Celluloseacetat thermisch geschädigt wird.

Das Celluloseacetat kann mit den jeweiligen Verstärkungskomponenten bzw. anderen Zusatzmitteln in beliebiger Form gemischt werden. Grundsätzlich können alle entsprechenden Einsatzformen, die aus anderen Bereichen bekannt und erprobt sind, herangezogen werden. Geeignete Einsatzformen sind z.B. Pulver, Mahlgut oder Granulat, insbesondere aber auch Fasern mit unterschiedlichen Längen und Querschnitten oder auch Folienbändchen des Celluloseacetats. Möglich ist auch die Anwendung des Bindemittels in Form von Flächengebilden, wie Folien oder Faservliesen. Schließlich kann das Bindemittel in Einzelfällen auch aus flüssiger Phase, aus Lösungen oder Dispersionen, eingebracht werden.

Zum Vermischen der erläuterten Ausgangsmaterialien des erfindungsgemäßen Formkörpers eignen sich grundsätzlich alle bekannten Verfahren der Komposit-Herstellung. Wegen der speziellen Eigenschaften der Verbundkomponenten sind einige Mischverfahren besonders bevorzugt. So kommen die üblichen Verfahren der Polymer-Compoundierung in Frage, wobei beispielsweise Extruder, Strainer, Kneter oder Walzwerke herangezogen werden. Da es dabei bereits vor der Formgebung zu einer thermischen und mechanischen Belastung der Verbundkomponenten kommen kann, sind Mischmethoden, bei denen das als Bindemittel wirkende Celluloseacetat nicht wesentlich thermisch belastet wird, besonders vorteilhaft.

Für die Herstellung von Formteilen bzw. für die Herstellung bestimmter Eigenschaftsprofile sind z.B. die Imprägnierung mit Lösungen oder Dispersionen oder auch die Vereinigung der Komponenten in flächiger Form als Folie und/oder Faservlies durch Laminierung oder nach Sandwich- bzw. Filmstacking-Verfahren besonders gut geeignet. Besonders vorteilhaft ist im Hinblick auf die erfindungsgemäß möglichen Materialeigenschaften die Zugabe des Celluloseacetats zum jeweiligen Verstärkungsmaterial in Form von Pulvern oder Fasern, z.B. durch Misch- und Streuverfahren, in Fasermischstationen oder im Zuge eines der verschiedenen Vliesbildungsverfahren. Geeignet sind insbesondere die mechanische Vliesbildung auf Krempeln oder Karden, die aerodynamische Vliesbildung und die hydrodynamische Vliesbildung bzw. der Papierprozeß.

Nach dem Mischprozeß liegt das Ausgangsmaterial, abhängig vom angewandten Mischverfahren, mit unterschiedlichem Charakter vor. So erhält man z.B. bei der Compoundierung auf Extrudern oder im Filmstacking-Verfahren harte und feste Produkte. Diese können gegebenenfalls zur Weiterverarbeitung granuliert oder aber bereits direkt zu Platten, Profilen oder fertigen Teilen geformt werden. Durch Fasermischung oder mit Vliesbildungsverfahren erhält man, je nach Vorgehensweise, lockere oder feste Matten, die gegebenenfalls bereits als solche z.B. zu Dämmzwecken eingesetzt werden können oder als Halbzeug anschließend zu den gewünschten Produkten weiterverarbeitet werden. Neben der biologischen Abbaubarkeit ist ein wesentliches vorteilhaftes Charakteristikum der erfindungsgemäßen Formkörper die Tatsache. daß sie zwar prinzipiell Thermoplaste enthalten und auch darauf zurückgehende Vorzüge besitzen, jedoch die Thermoplastizität nur unter speziellen Verarbeitungsbedingungen gegeben ist. Dagegen verhalten sich die Produkte unter üblichen Gebrauchsbedingungen praktisch nicht thermoplastisch und besitzen damit eine ausgezeichnete Wärmestandfestigkeit.

Die erfindungsgemäßen Verbundmaterialien besitzen bei spezifischen Verarbeitungsbedingungen die notwendig gute Verformbarkeit. Insbesondere sind die Preßtemperatur und der Preßdruck der jeweiligen Zusammensetzung im oben angesprochenen Rahmen anzupassen. Allerdings ist bei der Verarbeitung auch die Materialfeuchtigkeit von Relevanz. So muß der Gesamtfeuchtigkeitsgehalt des Ausgangsmaterials mindestens 3 Masse-%, bezogen auf die Gesamtmenge des in dem Ausgangsgemisch eingesetzten Celluloseacetats, betragen. Gegebenenfalls kann diese Menge etwa 20 Masse-% betragen, wobei regelmäßig besonders gute Werte in dem Bereich von 3 bis 5 Masse-% erzielt werden. Im allgemeinen enthalten die natürlichen Cellulosefasern bzw. natürlichen cellulosehaltigen Fasern bereits den nötigen Feuchtigkeitsgehalt, um in der Vermischung obige Anforderungen an den Gesamtfeuchtigkeitsgehalt zu erfüllen. So enthält Flachs beispielsweise unter den Bedingungen eines Normklimas (nach DIN 50 014 / 20°C / 65%ige Luftfeuchtigkeit) 8 bis 10% Wasser.

Auch das Celluloseacetat enthält in Abhängigkeit vom Substitutionsgrad und den jeweils vorliegenden Klimabedingungen einen gewissen Gleichgewichtsfeuchtigkeitsgehalt. Zweckmäßigerweise kann ein gewünschter Gesamtfeuchtigkeitsgehalt durch Konditionieren der Ausgangsmaterialien, vorzugsweise in bereits vermischter Form, beispielsweise als Faservlies, in einer Klimakammer mit geeigneter Temperatur und Luftfeuchtigkeit erreicht werden. Alternativ können z.B. Faservliese vor dem Verpressen durch Besprühen mit Wasser auf einen gewünschten Feuchtigkeitsgehalt gebracht werden.

Die erfindungsgemäßen Formkörper lassen sich, wie ohne weiteres ersichtlich, aufgrund ihrer besonderen thermischen und mechanischen Eigenschaften vielfältig mit Vorteil einsetzen. Dies gilt insbesondere im Automobilbereich, so z.B. als Seitenverkleidungen bzw. Türverkleidungen sowie als Dachhimmel, als Verpackungsmaterial, Dämmaterial und als Möbelteil. Von Bedeutung sind die erfindungsgemäßen Formkörper auch als Halbzeuge jeglicher Art, wie Vliesstoffe, Matten, Platten und Folien.

Die Erfindung soll nachfolgend anhand verschiedener Beispiele erläutert werden. Dabei wird bezüglich erfindungswesentlicher Merkmale auf die Tabellen 1 bis 3 Bezug genommen.

### Beispiele 1 bis 10

Es wurden Celluloseacetatfasern mit dem aus der Tabelle 1 ersichtlichen DS-Wert und dem dort angegebenen Faseranteil herangezogen. Dabei wurden Flachsfasern einer Schnittlänge von 10 mm und Celluloseacetatfasern einer Schnittlänge von 5 mm und einer Feinheit von 3 dtex mit einer Naßvliesanlage zu Faservliesen verarbeitet. Es kommen zwei Celluloseacetattypen zum Einsatz, die sich im Substitutionsgrad (DS) unterscheiden: DS 2,2 (Beispiele 1 bis 5) und DS 2,5 (Beispiele 6 bis 10). Der Anteil an Flachsfasern variiert von 15 bis 85 Gew.-%. Diese Vliese werden mehrlagig in einer hydraulischen Presse zu etwa 2,5 mm dicken Platten verpreßt. Die Preßbedingungen sind 260°C, 1 min und 120 bar. Die Vliese wurden vor dem Verpressen auf einen Gesamtfeuchtigkeitsgehalt von etwa 4 Masse-% konditioniert. Die mechanischen Eigenschaften sind in Tabelle 1 angegeben.

### Beispiele 11 bis 15

Es wurden Celluloseacetatfasern mit dem aus der Tabelle 2 ersichtlichen DS-Wert und dem dort angegebenen Faseranteil herangezogen. Alle in Tabelle 2 aufgeführten Preßplatten besitzen einen Faseranteil von 50 Masse-%. Bzgl. der mechanischen Eigenschaften der hiernach erhaltenen Formkörper sei ebenfalls auf Tabelle 2 verwiesen.

Beispiel 13 entspricht dem Beispiel 8, wobei jedoch das Vlies nicht auf einer Naßanlage. sondern mit einer Vlieskrempel hergestellt wurde (Faserlänge von Flachs und Celluloseacetat: 50 mm).

Die Beispiele 14 und 15 entsprechen dem Beispiel 8, wobei anstelle von Flachs Jute und Papierfaser (CTMP) eingearbeitet wird.

### Vergleichsbeispiele 1 und 2

Zum Vergleich des Werkstoffs Celluloseacetat wurden Preßplatten mit Bioceta® erstellt (spritzgießfähiges Celluloseacetat mit hohem Weichmacheranteil, Herstellung auf Naßvliesanlage, 50% Flachs) sowie Polypropylen (Herstellung nach dem "Film-Stacking"-Verfahren), wobei ein Sandwich-Aufbau aus mehreren Lagen Flachsvlies und PP-Folie verpreßt wird. Der Flachsanteil beträgt 50 Masse-%. Die mechanischen Kenndaten sind in Tabelle 2 angegeben. Die gemessene Vicat-Temperatur ist ein Maß für die Wärmeformbeständigkeit.

### Beispiele 16 bis 18

Es wurden Celluloseacetatfasern mit dem aus der Tabelle 3 ersichtlichen DS-Wert und dem dort angegebenen Faseranteil herangezogen. Preßplatten aus reinem Celluloseacetat (Beispiel 16) sowie Preßplatten mit 50 und 75 Masse-% Flachs nach Beispiele 17 und 18 wurden in Anlehnung an den Erdeingrabtest nach DIN 53 933 45 Tage lang in feuchte Erde eingegraben und bei 29°C gelagert. Die Änderungen der mechanischen Eigenschaften sowie der Gewichtsverlust sind angegeben. Durch den Zusatz von Flachs erhöht sich der Gewichtsverlust. Dies bedeutet, daß der biologische Abbau schneller abläuft.

### Beispiel 19

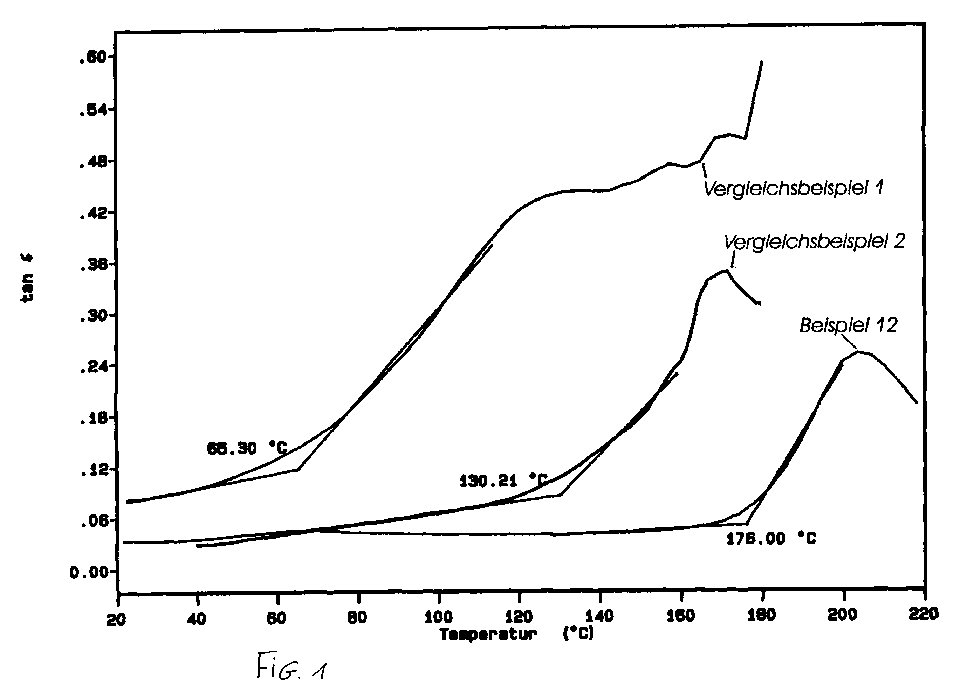

Die Materialien von Vergleichsbeispiel 1 (CA-Bioceta®), Vergleichsbeispiel 2 (Polypropylen) und Beispiel 12 (erfindungsgemäß) wurden der dynamisch-mechanischen Thermoanalyse unterworfen. Bei diesem Meßprinzip wird eine streifenförmige Probe an einem Ende fest eingespannt, während das bewegliche andere Ende mittels eines Motors mit einer Frequenz von 1 Hz und einer Amplitude von 30 µm in Schwingung versetzt wird. Die zur Biegung der Probe benötigte Kraft wird gemessen und als tan δ ausgegeben. Während der Messung befindet sich die Probe in einer Thermokammer, die mit einer konstanten Heizrate von 2°C/min aufgeheizt wird. Bei Erweichung der Probe erfolgt ein Anstieg von tan δ. In Figur 1 sind die Verläufe von tan δ über die Temperatur dargestellt. Daraus lassen sich die Erweichungstemperaturen in °C bestimmen, die in Tabelle 4 wiedergegeben sind. Es erweist sich, daß das erfindungsgemäße Material mit 176°C die höchste Erweichungstemperatur aufweist.

Für sämtliche Tabellen gilt, daß die Abkürzung CA für Celluloseacetat steht.

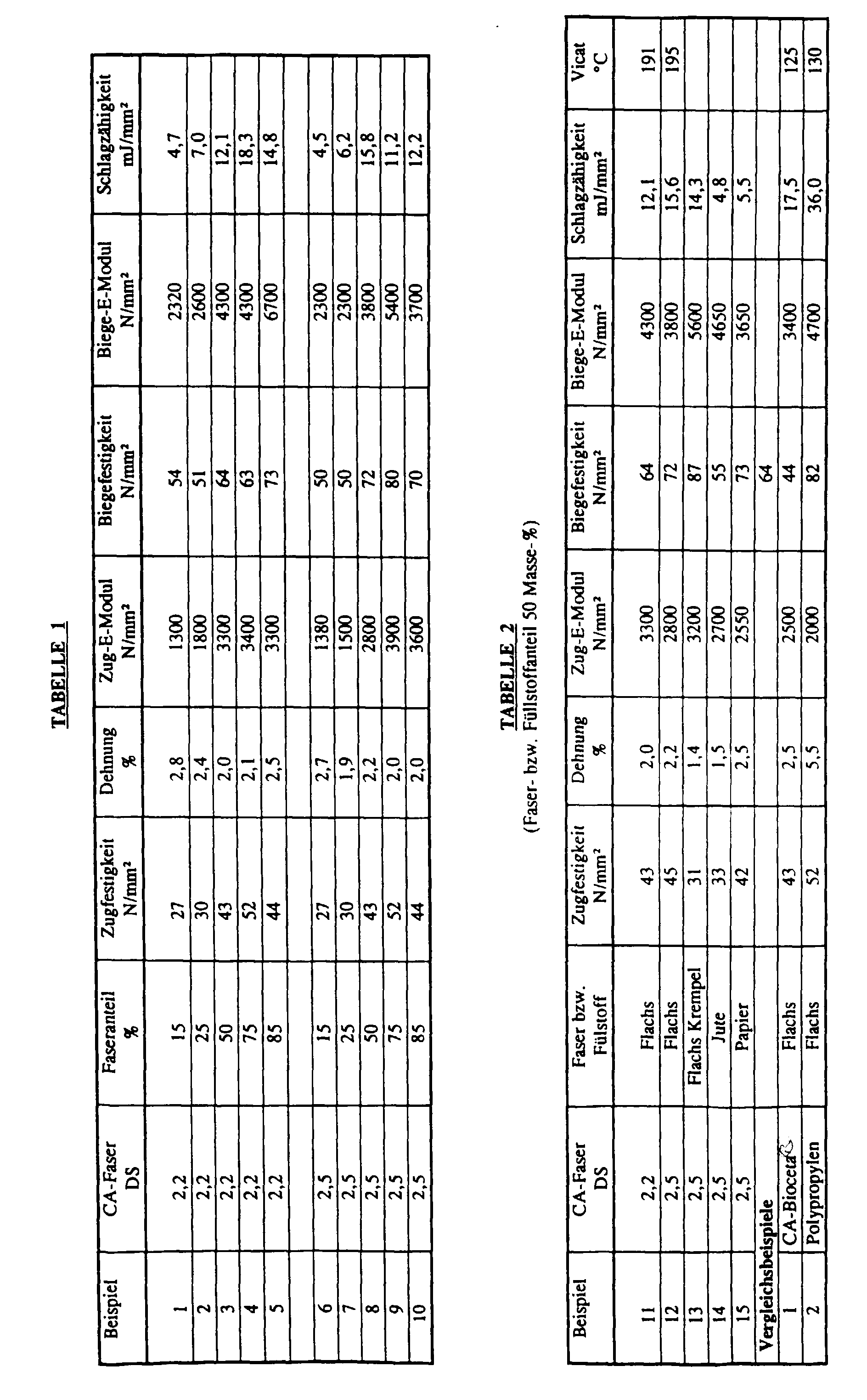

**TABELLE 3**

| Eingrabtest | | | | | |
|---|---|---|---|---|---|
| (Prozentuale Änderung der Eigenschaften bezogen auf den Startwert von 100% Matrix: Celluloseacetat mit DS = 2,5, Eingrabdauer 45 Tage) | | | | | |
| Beispiel | Anteil Flachs % | Zugfestigkeitsänderung % | Zug-E-Modul-Änderung % | Bruchdehnungsänderung % | Gewichtsverlust % |
| 16 | 0 | 127 | 92,0 | 150 | 0,5 |
| 17 | 50 | 59 | 52,0 | 142 | 7 |
| 18 | 75 | 48 | 39,0 | 150 | 15 |

**TABELLE 4**

| DMTA-Messung | |
|---|---|
| **Beispiel** | **Erweichungstemperatur in °C** |
| Vergleichsbeispiel 1 | 65 |
| Vergleichsbeispiel 2 | 130 |
| Beispiel 12 | 176 |

### Anmerkung:

Die verschiedenen Eigenschaften wurden nach folgenden DIN-Vorschriften bestimmt:
- Zugfestigkeit:: DIN 53 455
- Zug-E-Modul:: DIN 53 457
- Biegefestigkeit:: DIN 53 452
- Biege-E-Modul:: DIN 53 457
- Bruchdehnung:: DIN 53 455
- Schlagzähigkeit:: DIN 53 453

## Patentansprüche

1. Formkörper aus Verbundmaterial auf der Basis von Celluloseacetat als Bindemittel und verstärkenden natürlichen Cellulosefasern bzw. natürlichen cellulosehaltigen Fasern, dadurch **gekennzeichnet,** daß das Celluloseacetat eine Substitutionsgrad (DS) von 1,2 bis 2,7 und der Formkörper eine Vicat-Temperatur (bestimmt nach DIN 53 460, Dezember 1976) von mindestens 160°C aufweist und das Masseverhältnis von Celluloseacetat zu natürlichen Cellulosefasern bzw. natürlichen cellulosehaltigen Fasern 10:90 bis 90:10 beträgt, wobei der Formkörper weitgehend oder vollständig frei an externem Weichmacher ist.

2. Formkörper nach Anspruch 1, dadurch gekennzeichnet, daß der Substitutionsgrad (DS) des Celluloseacetats zwischen 1,8 bis 2,6, insbesondere zwischen 2,1 und 2,5 liegt.

3. Formkörper nach Anspruch 1 oder 2, dadurch gekennzeichnet, daß das Masseverhältnis von Celluloseacetat zu den natürlichen Cellulosefasern bzw. den natürlichen cellulosehaltigen Fasern 15: 85 bis 85 : 15, insbesondere 25 : 75 bis 60 : 40 beträgt.

4. Formkörper nach mindestens einem der vorhergehenden Ansprüche, dadurch gekennzeichnet, daß die Vicat-Temperatur mindestens 170°C, insbesondere 180 bis 200°C, beträgt.

5. Formkörper nach mindestens einem der vorhergehenden Ansprüche, dadurch gekennzeichnet, daß der Polymerisationsgrad (DP) des Celluloseacetats zwischen 140 bis 270, insbesondere zwischen 170 bis 250 liegt.

6. Formkörper nach mindestens einem der vorhergehenden Ansprüche, dadurch gekennzeichnet, daß die natürlichen Cellulosefasern bzw. natürlichen cellulosehaltigen Fasern eine mittlere Faserlänge von 0,2 mm bis 100 mm, insbesondere von 3 mm bis 30 mm, und einen mittleren Querschnittsdurchmesser von 8 µm bis 100 µm, insbesondere von 10 µm bis 30 µm, aufweisen.

7. Formkörper nach mindestens einem der vorhergehenden Ansprüche, dadurch gekennzeichnet, daß die natürlichen Cellulosefasern bzw. natürlichen cellulosehaltigen Fasern in Form von Kapok-, Sisal-, Jute-, Flachs-, Kokos-, Kenaf-, Abaka-, Maulbeerbast-, Hanf-, Ramie- und/oder Baumwollfasern vorliegen.

8. Formkörper nach mindestens einem der vorhergehenden Ansprüche, dadurch gekennzeichnet, daß er zusätzlich mineralische Materialien enthält.

9. Formkörper nach Anspruch 8, dadurch gekennzeichnet, daß das mineralische Material als Calciumcarbonat, Calciumsulfat, Siliziumdioxid und/oder Aluminosilikat vorliegt.

10. Formkörper nach Anspruch 8 oder 9, dadurch gekennzeichnet, daß das mineralische Material in einer Menge von 5 bis 50 Masse-%, insbesondere 10 bis 20 Masse-% vorliegt.

11. Formkörper nach mindestens einem der vorhergehenden Ansprüche. dadurch gekennzeichnet, daß er Farbmittel enthält.

12. Formkörper nach Anspruch 11, dadurch gekennzeichnet, daß das Farbmittel ein Pigment, insbesondere ein Weißpigment, ist.

13. Formkörper nach Anspruch 11 oder 12, dadurch gekennzeichnet, daß die Farbmittel darin in einer Menge von 0,2 bis 1 Masse-% vorliegen.

14. Verfahren zur Herstellung des Formkörpers nach einem der Ansprüche 1 bis 13, dadurch gekennzeichnet, daß das Celluloseacetat mit den natürlichen Cellulosefasern bzw. den natürlichen cellulosehaltigen Fasern in einem Masseverhältnis von 10 : 90 bis 90 :10, insbesondere 15 : 85 bis 85 : 15, gemischt werden, der Gesamtfeuchtigkeitsgehalt auf mindestens 3 Masse-%, bezogen auf die Gesamtmenge des Celluloseacetats, in diesem Gemisch eingestellt wird und dieses Gemisch bei einer Temperatur von 220 bis 280°C und einem Druck von 30 bis 150 bar verpreßt wird.

15. Verfahren nach Anspruch 14, dadurch gekennzeichnet, daß die Ausgangskomponenten bei Raumtemperatur gemischt werden.

16. Verfahren nach Anspruch 14 oder 15, dadurch gekennzeichnet, daß das Verpressen bei einer Temperatur von 240 bis 270°C und einem Druck von 50 bis 130 bar durchgeführt wird.

17. Verwendung der Formkörper nach mindestens einem der Ansprüche 1 bis 13 als Automobilinnenteil, insbesondere als Dachhimmel und als Seitenverkleidung, Verpackungsmaterial, Dämmaterial oder Möbelteil.

## Claims

1. A formed structure comprising composite material based on cellulose acetate binder and reinforcing natural cellulosic fibre, characterized in that the cellulose acetate has a degree of substitution (DS) of 1.2 to 2.7 and the formed structure has a Vicat temperature (determined according to DIN 53460, December 1976) of at least 160°C and the mass ratio of cellulose acetate to natural cellulosic fibre is 10:90 to 90:10, the formed structure being substantially or completely free of external plasticizer.

2. A formed structure according to Claim 1, characterized in that the degree of substitution (DS) of the cellulose acetate is between 1.8 to 2.6, especially between 2.1 and 2.5.

3. A formed structure according to Claim 1 or 2, characterized in that the mass ratio of cellulose acetate to the natural cellulosic fibre is 15:85 to 85:15, especially 25:75 to 60:40.

4. A formed structure according to at least one of the preceding claims, characterized in that the Vicat temperature is at least 170°C, especially 180 to 200°C.

5. A formed structure according to at least one of the preceding claims, characterized in that the degree of polymerization (DP) of the cellulose acetate is between 140 to 270, especially between 170 to 250.

6. A formed structure according to at least one of the preceding claims, characterized in that the natural cellulosic fibre has an average length of 0.2 mm to 100 mm, especially 3 mm to 30 mm, and an average cross-sectional diameter of 8 µm to 100 µm, especially 10 µm to 30 µm.

7. A formed structure according to at least one of the preceding claims, characterized in that the natural cellulosic fibre is present in the form of kapok, sisal, jute, flax, coir, kenaf, abaca, mulberry bast, hemp, ramie and/or cotton fibre.

8. A formed structure according to at least one of the preceding claims, characterized in that it additionally contains mineral materials.

9. A formed structure according to Claim 8, characterized in that the mineral material is present as calcium carbonate, calcium sulphate, silicon dioxide and/or aluminosilicate.

10. A formed structure according to Claim 8 or 9, characterized in that the mineral material is present in an amount of 5 to 50% by mass, especially 10 to 20% by mass.

11. A formed structure according to at least one of the preceding claims, characterized in that it contains colorant.

12. A formed structure according to Claim 11, characterized in that the colorant is a pigment, especially a white pigment.

13. A formed structure according to Claim 11 or 12, characterized in that the colorant is present therein in an amount of 0.2 to 1% by mass.

14. A process for producing the formed structure according to any of Claims 1 to 13, characterized in that the cellulose acetate is mixed with the natural cellulosic fibre in a mass ratio of 10:90 to 90:10, especially 15:85 to 85:15, the total moisture content in this mixture is adjusted to at least 3% by mass, based on the total amount of the cellulose acetate, and this mixture is pressed at a temperature of 220 to 280°C and a pressure of 30 to 150 bar.

15. A process according to Claim 14, characterized in that the starting components are mixed at room temperature.

16. A process according to Claim 14 or 15, characterized in that the pressing is carried out at a temperature of 240 to 270°C and a pressure of 50 to 130 bar.

17. The use of the formed structures according to at least one of Claims 1 to 13 as automotive interior part, especially as inner roof lining and as side trim, packaging material, insulating material or furniture component.

## Revendications

1. Pièce moulée en un matériau composite à base d'acétate de cellulose comme liant et de fibres de cellulose naturelle ou de fibres contenant de la cellulose naturelle comme armature, caractérisée en ce que l'acétate de cellulose a un degré de substitution (DS) de 1,2 à 2,7 et la pièce moulée a une température Vicat (déterminée selon la norme DIN 53 460 de décembre 1976) d'au moins 160°C et le rapport en masse de l'acétate de cellulose aux fibres de cellulose naturelle ou aux fibres contenant de la cellulose naturelle s'élève à une valeur de 10:90 à 90:10, la pièce moulée étant largement ou totalement dépourvue de plastifiant externe.

2. Pièce moulée suivant la revendication 1, caractérisée en ce que le degré de substitution (DS) de l'acétate de cellulose va de 1,8 à 2,6, en particulier de 2,1 à 2,5.

3. Pièce moulée suivant la revendication 1 ou 2, caractérisée en ce que le rapport en masse de l'acétate de cellulose aux fibres de cellulose naturelle ou aux fibres contenant de la cellulose naturelle va de 15:85 à 85:15, en particulier de 25:75 à 60:40.

4. Pièce moulée suivant au moins l'une des revendications précédentes, caractérisée en ce que la température Vicat s'élève à une valeur d'au moins 170°C, notamment de 180 à 200°C.

5. Pièce moulée suivant au moins l'une des revendications précédentes, caractérisée en ce que le degré de polymérisation (DP) de l'acétate de cellulose va de 140 à 270, en particulier de 170 à 250.

6. Pièce moulée suivant au moins l'une des revendications précédentes, caractérisée en ce que les fibres de cellulose naturelle ou les fibres contenant de la cellulose naturelle ont une longueur moyenne de 0,2 mm à 100 mm, en particulier de 3 mm à 30 mm, et un diamètre moyen de section transversale de 8 µm à 100 µm, en particulier de 10 µm à 30 µm.

7. Pièce moulée suivant au moins l'une des revendications précédentes, caractérisée en ce que les fibres de cellulose naturelle ou les fibres contenant de la cellulose naturelle se présentent sous forme de fibres de kapok, de sisal, de jute, de lin, de coco, de Kénaf, d'Abaca, de mûrier, de chanvre, de ramie et/ou de coton.

8. Pièce moulée suivant au moins l'une des revendications précédentes, caractérisée en ce qu'elle contient en outre des matières minérales.

9. Pièce moulée suivant la revendication 8, caractérisée en outre en ce que la matière minérale est présente sous forme de carbonate de calcium, sulfate de calcium, dioxyde de silicium et/ou aluminosilicate.

10. Pièce moulée suivant la revendication 8 ou 9, caractérisée en ce que la matière minérale est présente en une quantité de 5 à 50 % en masse, en particulier de 10 à 20 % en masse.

11. Pièce moulée suivant au moins l'une des revendications précédentes, caractérisée en ce qu'elle contient un colorant.

12. Pièce moulée suivant la revendication 11, caractérisée en ce que le colorant est un pigment, notamment un pigment blanc.

13. Pièce moulée suivant la revendication 11 ou 12, caractérisée en ce que les colorants y sont présents en une quantité de 0,2 à 1 % en masse.

14. Procédé de production de la pièce moulée suivant l'une des revendications 1 à 13, caractérisé en ce que l'acétate de cellulose est mélangé avec les fibres de cellulose naturelle ou les fibres contenant de la cellulose naturelle dans un rapport en masse de 10:90 à 90:10, en particulier de 15:85 à 85:15, la teneur en humidité totale dans ce mélange est ajustée à au moins 3 % en masse, par rapport à la quantité totale d'acétate de cellulose, et ce mélange est pressé à une température de 220 à 280°C et sous une pression de 30 à 150 bars.

15. Procédé suivant la revendication 14, caractérisé en ce que les composés de départ sont mélangés à la température ambiante.

16. Procédé suivant la revendication 14 ou 15, caractérisé en ce que le moulage par compression est effectué à une température de 240 à 270°C et sous une pression de 50 à 130 bars.

17. Utilisation des pièces moulées suivant au moins l'une des revendications 1 à 13 comme élément intérieur de véhicule automobile, notamment comme habillage de plafond et comme revêtement latéral, matériau d'emballage, matériau d'isolation ou élément de meuble.
